(19) Europäisches Patentamt
European Patent Office
Office européen des brevets

(11) Veröffentlichungsnummer: **0 174 275 B1**

(12) # EUROPÄISCHE PATENTSCHRIFT

(45) Veröffentlichungstag der Patentschrift: **29.05.91**

(51) Int. Cl.5: **C09B 62/04**, C09B 62/503, D06P 1/38

(21) Anmeldenummer: **85810384.9**

(22) Anmeldetag: **26.08.85**

Die Akte enthält technische Angaben, die nach dem Eingang der Anmeldung eingereicht wurden und die nicht in dieser Patentschrift enthalten sind.

(54) **Verfahren zum Färben oder Bedrucken von textilen Fasermaterialien mit Reaktivfarbstoffen.**

(30) Priorität: **30.08.84 CH 4154/84**

(43) Veröffentlichungstag der Anmeldung:
**12.03.86 Patentblatt 86/11**

(45) Bekanntmachung des Hinweises auf die Patenterteilung:
**29.05.91 Patentblatt 91/22**

(84) Benannte Vertragsstaaten:
**BE CH DE FR GB IT LI**

(56) Entgegenhaltungen:
**EP-A- 0 040 790**
**EP-A- 0 069 376**
**EP-A- 0 079 563**
**EP-A- 0 084 849**
**DE-A- 3 113 473**

(73) Patentinhaber: **CIBA-GEIGY AG**
**Klybeckstrasse 141**
**CH-4002 Basel(CH)**

(72) Erfinder: **Scheibli, Peter, Dr.**
**Nussbaumweg 3**
**CH-4103 Bottmingen(CH)**
Erfinder: **Seitz, Karl, Dr.**
**Schützenweg 9**
**CH-4104 Oberwil(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 174 275 B1

## Beschreibung

Die vorliegende Erfindung liegt auf dem technischen Gebiet der Anwendung von Reaktivfarbstoffen zum Färben oder Bedrucken von textilen Fasermaterialien.

Reaktivfarbstoffe werden seit langem in grossem Umfang für das Färben und Bedrucken von Textilien aus Fasermaterialien eingesetzt. Angesichts der steigenden Anforderungen an Reaktivfärbungen in bezug auf Wirtschaftlichkeit, Applikationstechnik und Echtheitsniveau ist der erreichte technische Stand aber vielfach nicht voll befriedigend.

Der vorliegenden Erfindung lag die Aufgabe zugrunde, ein neues, verbessertes Verfahren zum Färben oder Bedrucken von textilen Fasermaterialien mit Reaktivfarbstoffen zu finden, das zu echten Färbungen und Drucken führt.

Mit der vorliegenden Erfindung wird ein neues Verfahren vorgestellt, das die gestellten Anforderungen erfüllt.

Das Verfahren ist dadurch gekennzeichnet, dass man Reaktivfarbstoffe der Formel

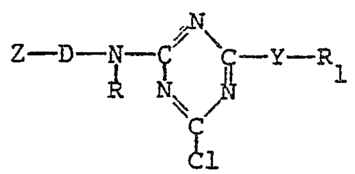

(1)

verwendet, worin Z ein Rest der Formel

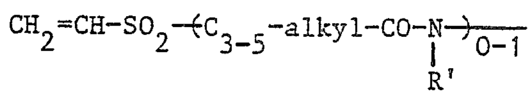

(2)

oder

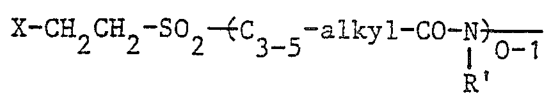

(3)

und R' Wasserstoff oder gegebenenfalls substituiertes $C_1$-$C_4$-Alkyl ist, R Wasserstoff, Methyl oder Aethyl, Y Sauerstoff oder Schwefel, $R_1$ $C_1$-$C_4$-Alkyl oder $C_1$-$C_4$-Alkoxy-$C_1$-$C_4$-alkyl, X ein unter alkalischen Bedingungen abspaltbarer anorganischer oder organischer Rest und D ein Anthrachinon-, Phthalocyanin-, Formazan-, Azomethin-, Dioxazin-, Phenazin-, Stilben-, Triphenylmethan-, Xanthen-, Thioxanthon-, Pyrenchinon- oder Perylentetracarbimid-Farbstoffrest ist, oder dass man Mono- oder Disazofarbstoffe der Formel

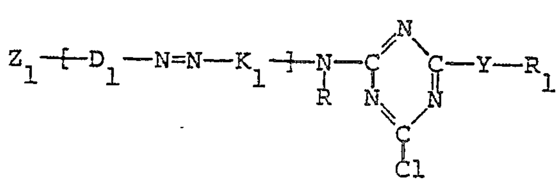

(4)

oder

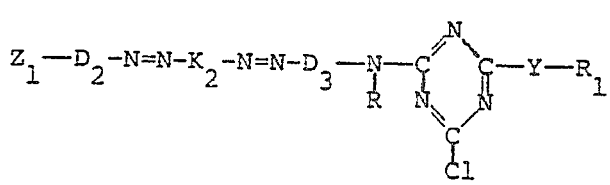

(5),

worin $D_1$ ein hydroxygruppenfreier Rest einer Diazokomponente der Benzolreihe, $K_1$ der Rest einer

Kupplungskomponente der Benzol- oder Naphthalinreihe oder der heterocyclischen Reihe, $D_2$ und $D_3$ je ein Rest einer Diazokomponente der Benzol- oder Naphthalinreihe, $K_2$ der Rest einer Kupplungskomponente der Naphthalinreihe ist, wobei die Diazokomponente $D_3$ in ortho-Stellung zu einer Aminogruppe in der Kupplungskomponente $K_2$ gekuppelt ist, und $Z_1$ an $D_2$ als Diazokomponente der Benzolreihe in m- oder p-Stellung zur Azogruppe gebunden ist, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino ist, und R, Y und $R_1$ die angegebenen Bedeutungen haben, verwendet.

Die Reaktivfarbstoffe der Formel (1) enthalten somit einen Rest der Formel (2) oder (3) und einen Rest der Formel

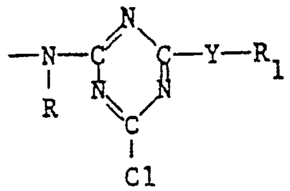

(6) .

Der Rest X in Formel (3) ist z.B. ein Halogenatom, wie Fluor, Chlor oder Brom, eine Sulfato-, Thiosulfato-, Phosphato-, Acetoxy- oder Propionoxy-Gruppe oder dergleichen.

Als Alkylrest kommt für R in Formeln (1), (4) und (5) ein geradkettiger oder verzweigter Alkylrest in Betracht, der auch substituiert sein kann, z.B. durch Halogen, Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl, Sulfomethyl oder Sulfoäthyl.

Der Rest $R_1$ ist ein Alkylrest, der geradkettig oder verzweigt ist, der 1 bis 4 Kohlenstoffatome aufweist, und der weitersubstituiert sein kann, z.B. durch Alkoxy mit 1 bis 4 Kohlenstoffatomen.

Als Beispiele für $R_1$ seien die folgenden Substituenten genannt:

Methyl, Aethyl, Propyl, Butyl, Isobutyl, sek.-Butyl, tert.-Butyl, β-Methoxyäthyl, β-Aethoxyäthyl, β-Methoxypropyl. Bevorzugt sind unsubstituierte Alkylreste mit 1 bis 4 Kohlenstoffatomen.

In dem erfindungsgemässen Verfahren werden bevorzugt verwendet:

a) Reaktivfarbstoffe der Formel (1), worin D die unter Formel (1) angegebene Bedeutung hat, R Wasserstoff, Methyl oder Aethyl, Y Sauerstoff oder Schwefel, und $R_1$ $C_{1-4}$-Alkyl oder $C_{1-4}$-Alkoxy-$C_{1-4}$-alkyl ist.

b) Reaktivfarbstoffe der Formel

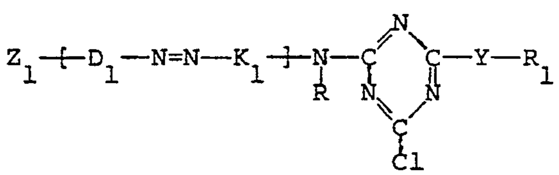

(4),

worin $D_1$ ein von HO- und HOOC-Gruppen freier Rest einer Diazokomponente der Benzolreihe, $K_1$ der Rest einer Kupplungskomponente der Benzol- oder Naphthalinreihe oder der heterocyclischen Reihe, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist.

c) Reaktivfarbstoffe der Formel

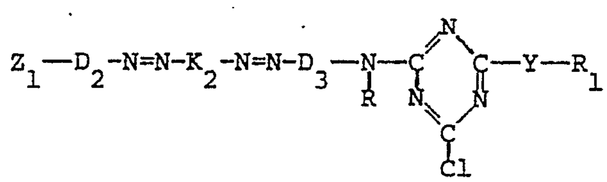

(5),

worin $D_2$ und $D_3$ je ein Rest einer Diazokomponente der Benzol- oder Naphthalinreihe, $K_2$ der Rest einer

Kupplungskomponente der Naphthalinreihe ist, wobei die Diazokomponente $D_3$ in ortho-Stellung zu einer Aminogruppe in der Kupplungskomponente $K_2$ gekuppelt ist, und $Z_1$ an $D_2$ als Diazokomponente der Benzolreihe in m- oder p-Stellung gebunden ist, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist.

Der Rest D in Formel (1) kann in der üblichen Art substituiert sein, insbesondere enthält der Rest D eine oder mehrere Sulfonsäuregruppen. Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Gleiches gilt für die Reste $D_1$, $D_2$, $D_3$ $D_1$, $K_1$ und $K_2$ in den Formeln (4) und (5). Für $D_1$, $D_2$, $D_3$, $K_1$ und $K_2$ in Formeln (4) oder (5) als Rest eines Azofarbstoffs, enthält dieser als Substituenten insbesondere Methyl. Aethyl, Methoxy, Aethoxy, Acetylamino, Benzoylamino, Amino, Ureido, Hydroxy, Carboxy, Halogen, Sulfomethyl oder Sulfo.

Ferner sind auch Reaktivfarbstoffe in Betracht zu ziehen, worin einer der Reaktivreste der Formeln (2) bzw. (3) oder (6), oder beide über einen Rest der Formel

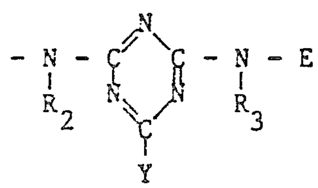

an den Chromophor gebunden sind. Dabei ist der Rest der Formel (2) bzw. (3) oder (6) an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Aethylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. $R_2$ und $R_3$ sind unabhängig voneinander Wasserstoff oder ein gegebenenfalls substituierter $C_{1-4}$-Alkylrest; und Y ist ein Halogenatom, eine gegebenenfalls substituierte Aminogruppe, Hydroxy, eine Alkoxy-, Aryloxy-, Alkylthio- oder Arylthiogruppe.

Gegenstand der Erfindung sind ferner

d) Reaktivfarbstoffe der Formel

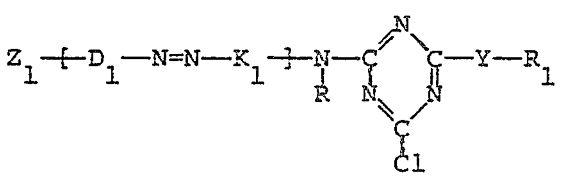

(4),

worin $D_1$ ein von HO- und HOOC-Gruppen freier Rest einer Diazokomponente der Benzolreihe, $K_1$ der Rest einer Kupplungskomponente der Benzol- oder Naphthalinreihe oder der heterocyclischen Reihe, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist; sowie

e) Reaktivfarbstoffe der Formel

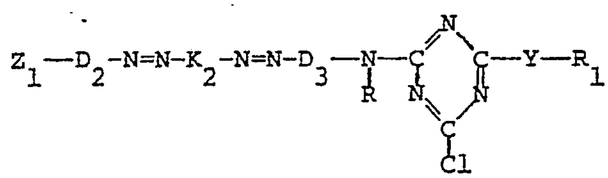 (5),

worin $D_2$ und $D_3$ je ein Rest einer Diazokomponente der Benzol- oder Naphthalinreihe, $K_2$ der Rest einer Kupplungskomponente der Naphthalinreihe ist, wobei die Diazokomponente $D_3$ in ortho-Stellung zu einer Aminogruppe in der Kupplungskomponente $K_2$ gekuppelt ist, und $Z_1$ an $D_2$ als Diazokomponente der Benzolreihe in m- oder p-Stellung gebunden ist, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist.

Die Reste der Formeln (2), (3) und (6) sind Reaktivreste, die nach Art einer nucleophilen Addition und nach Art einer nucleophilen Substitution reagieren können.

Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Erfindungsgemäss einsetzbare Reaktivfarbstoffe können hergestellt werden, indem man 2,4,6-Trichlor-s-triazin(cyanurchlorid) mit einem aliphatischen Alkohol oder Thiol kondensiert, und das primäre Kondensationsprodukt der Formel

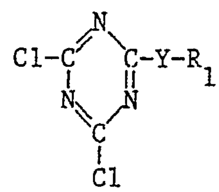 (7)

worin Y und $R_1$ die unter Formel (1) angegebenen Bedeutungen haben, mit einem aminogruppenhaltigen Farbstoff oder Farbstoffvorprodukt umsetzt, oder das erhaltene Zwischenprodukt in den gewünschten Endfarbstoff überführt, und gegebenenfalls eine weitere Umwandlungsreaktion anschliesst. Dabei muss der aminogruppenhaltige Farbstoff bzw. das Farbstoffvorprodukt oder eine der weiteren zur Fertigstellung des Reaktivfarbstoffes erforderlichen Komponenten einen Rest der Formel (2) oder (3) enthalten. Gegebenenfalls, wenn der Farbstoff eine Acylgruppe, z.B. eine Chlorsulfonyl- oder Chlortriazinylgruppe, enthält, kann der Rest der Formel (2) oder (3) auch durch Kondensation mit einem Amin, das einen Rest der Formel (2) oder (3) enthält eingeführt werden.

Man geht somit von Farbstoffen aus, die einen Rest der Formel (2) oder (3) bereits enthalten, und acyliert die Gruppe -N(R)H mit dem Dichlortriazin der Formel (7); oder man verwendet zur Herstellung des Farbstoffs der Formel (4) entsprechende Vorprodukte, z.B. eine Diazokomponente der Formel

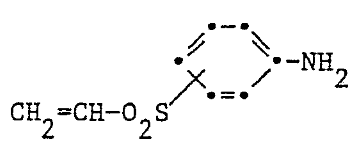

und kuppelt diese auf eine Kupplungskomponente $K_1$, welche eine Gruppe -N(R)H enthält, und acyliert die Gruppe -N(R)H vor oder nach der Kupplung mit dem Dichlortriazin der Formel (7). Bei der oben beschriebenen Ausführungsform kann die acylierbare Gruppe -N(R)H auch in der Diazokomponente vorhanden sein, und dementsprechend der die Reaktivgruppe $Z_1$ enthaltende Rest in der Kupplungskomponente. Man verwendet in diesem Fall als Diazokomponente vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem Dichlortriazin der Formel (7) durch Verseifen bzw. Reduzieren in die $H_2N$-Gruppe übergeführt wird. Die Stellung der Reaktivreste im fertigen Monoazofarbstoff ist somit nicht unveränderlich an bestimmte Ausgangskomponenten - Diazo- oder Kupplungskomponente - gebunden. Der Rest der Formel (2) oder (3) und der Rest der Formel (6) sind bei Disazofarbstoffen der Formel

$D_1 \rightarrow M \leftarrow D_2$

an je eine Diazokomponente gebunden.

Ferner können zur Herstellung der Farbstoffe der Formel (4) die beiden Reaktivreste auch an ein und dieselbe Komponente gebunden sein, beispielsweise indem man eine nichtfaserreaktive Diazokomponente sowie eine Kupplungskomponente der Formel

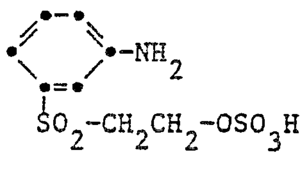

verwendet, und die $-NH_2$ Gruppe nach der Kupplung mit dem Dichlortriazin der Formel (7) acyliert.

Die Verfahrensvariante, bei welcher man von Farbstoffvorprodukten ausgeht, ist geeignet zur Herstellung von Reaktivfarbstoffen die aus zwei oder mehr als zwei Komponenten zusammengesetzt sind. Beispiele für derartige, aus zwei oder mehr als zwei Komponenten zusammengesetzte Farbstoffe sind: Monoazo-, Disazo-, Formazan- und Azomethinfarbstoffe. Bei der Herstellung der Endfarbstoffe aus Vorprodukten handelt es sich meistens um Kupplungen, die zu Azofarbstoffen führen.

Grundsätzlich lassen sich Reaktivfarbstoffe sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss den Formeln (2) oder (3) und (6) enthalten, ausgeht, oder diese faserreaktiven Reste in hierfür geeignete Zwischenprodukte mit Farbstoffcharakter einführt.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der einen Rest $HO\text{-}CH_2CH_2\text{-}SO_2\text{-}$ enthält, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff. mit einer Gruppe $H_2C=CH\text{-}SO_2\text{-}$, und lagert an das Zwischenprodukt Thioschwefelsäure an, wobei ein Rest $HO_3SS\text{-}CH_2CH_2\text{-}SO_2\text{-}$ entsteht. Die Sulfatierung der Hydroxygruppe in einem Farbstoff oder einem geeigneten Vorprodukt, erfolgt z.B. durch Umsetzung mit konzentrierter Schwefelsäure bei 0 °C bis mässig erhöhter Temperatur. Die Sulfatierung kann auch durch Reaktion der Hydroxyverbindung mit 2 Aequivalenten Chlorsulfonsäure pro Hydroxygruppe in einem polaren organischen Lösungsmittel, wie beispielsweise N-Methylpyrrolidon, bei 10 bis 80 °C erfolgen. Vorzugsweise erfolgt die Sulfatierung durch Eintragen der betreffenden Verbindung in Schwefelsäuremonohydrat bei Temperaturen zwischen 5 und 15 °C. Die Einführung eines anderen unter alkalischen Bedingungen abspaltbaren Restes für X in einen Farbstoff oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe, welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Da die einzelnen oben angegebenen Verfahrensschritte in unterschiedlicher Reihefolge ausgeführt werden können, sind verschiedene Verfahrensvarianten möglich. Im allgemeinen führt man die Umsetzung schrittweise nacheinander aus, wobei die Reihefolge der einfachen Reaktionen zwischen den einzelnen Reaktionskomponenten vorteilhafterweise sich nach den besonderen Bedingungen richtet. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der aminogruppenhaltigen Farbstoffe oder Farbstoffvorprodukte mit dem Dichlortriazin der Formel (7) erfolgt nach an sich bekannten Methoden, vorzugsweise in wässriger Lösung oder

Suspension und in Gegenwart von alkalischen, säurebindenden Mitteln, z.B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe verwendet werden können, einzeln genannt werden.

Als aminogruppenhaltige Farbstoffe kommen besonders Farbstoffe der folgenden Strukturtypen in Betracht:

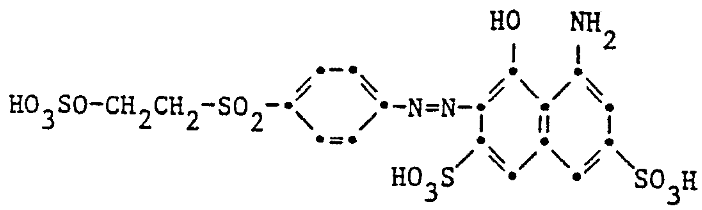

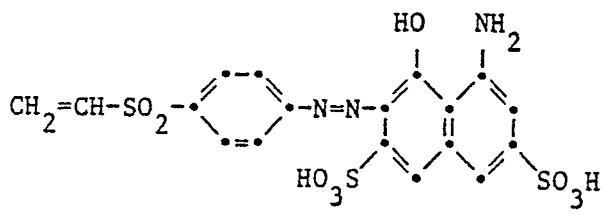

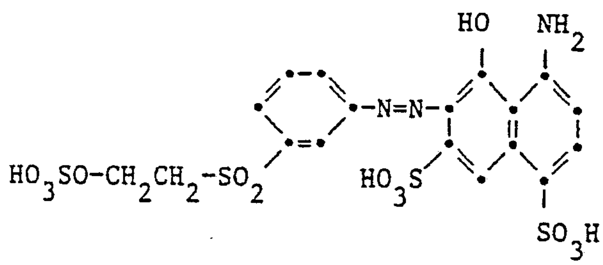

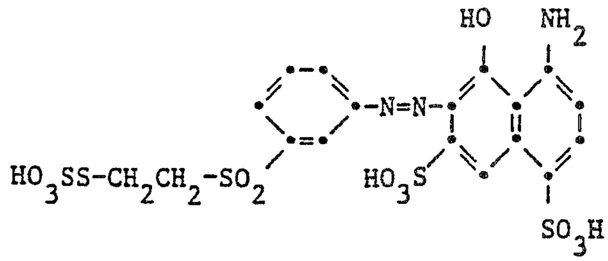

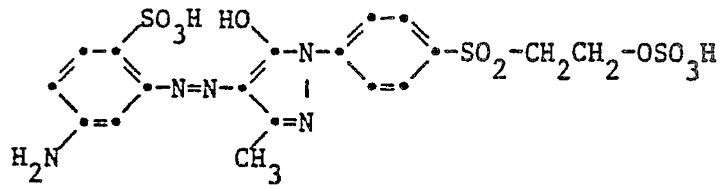

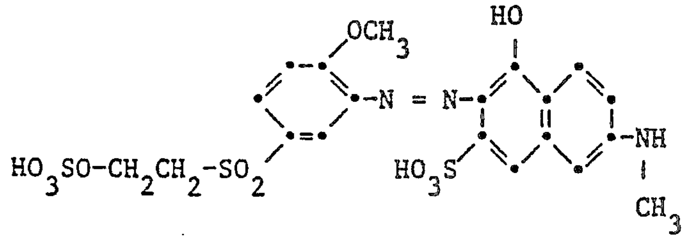

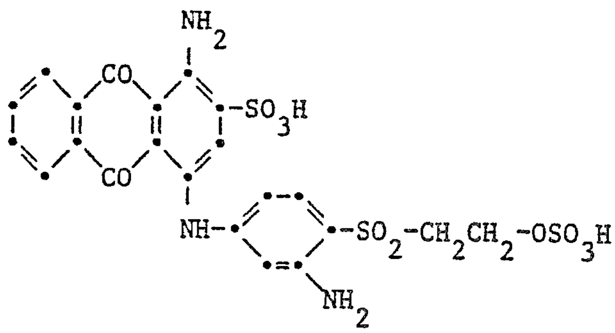

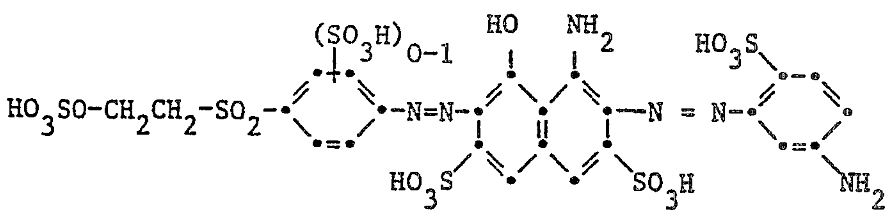

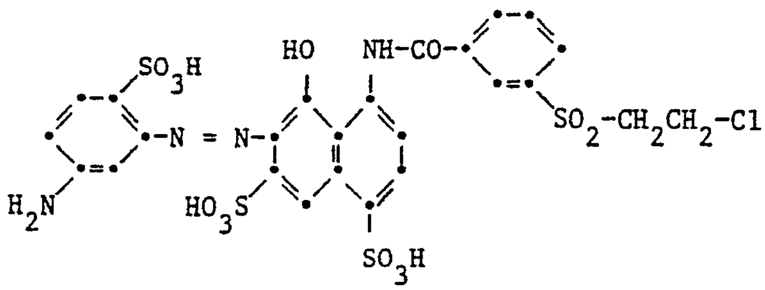

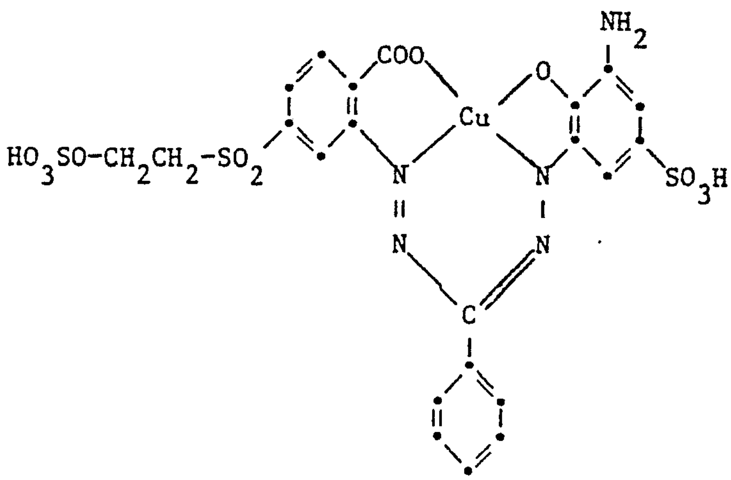

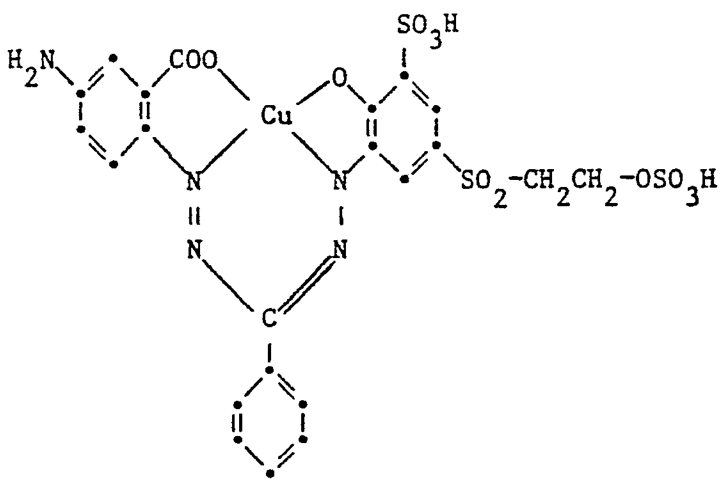

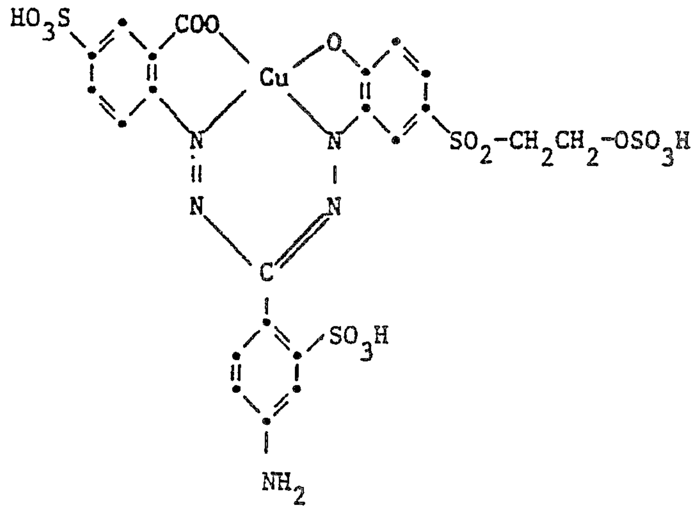

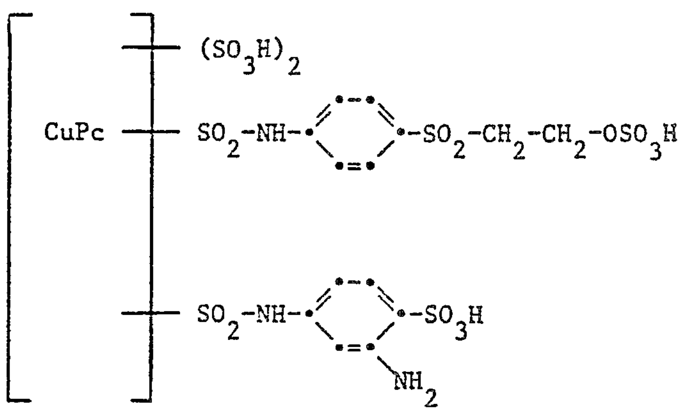

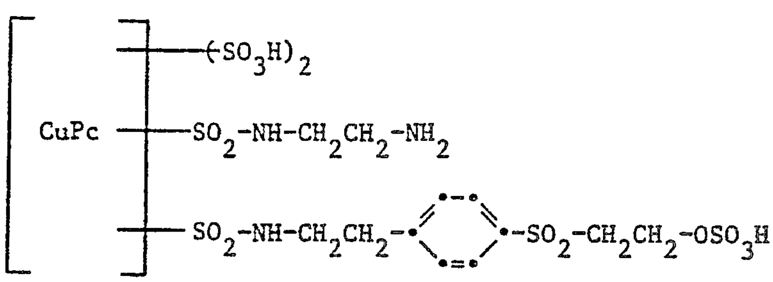

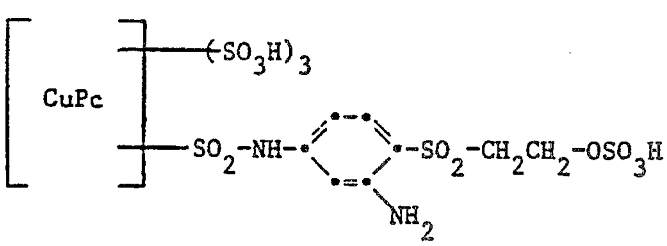

Geht man zur Herstellung der bevorzugten Reaktivfarbstoffe der Formel (4) oder (5) nicht von den fertigen Aminofarbstoffen, z.B. solchen die weiter vorn beschrieben sind, sondern von Farbstoffvorprodukten, d.h. den Diazo- und Kupplungskomponenten aus, muss eine der beiden Komponenten eine acylierbare Aminogruppe und die andere einen die Gruppe $Z_1$ enthaltenden Rest aufweisen. Als Diazokomponenten kommen vorwiegend geeignete Verbindungen aus der Aminobenzol- und Aminonaphthalinreihe in Betracht,

beispielsweise solche, die in den Azofarbstoffen der oben angegebenen Formeln enthalten sind, wie 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure,2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1,3,5-Triaminobenzol.

Aromatische Amine, die als Diazokomponenten zur Herstellung der Mono- oder Disazofarbstoffe dienen können, und die einen Rest der Formel (2) oder (3) enthalten, sind z.B.:

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-β-sulfatoäthylsulfonylbenzol, 1-Amino-2,6-dichlor-4-β-sulfatoäthylsulfonylbenzol, 2-Amino-8-β-sulfatoäthylsulfonylnaphthalin, 2-Amino-6-β-sulfatoäthylsulfonylnaphthalin, 2-Amino-6-β-sulfatoäthylsulfonylnaphthalin-1-sulfonsäure, 2-Amino-8-β-sulfatoäthylsulfonylnaphthalin-6-sulfonsäure.

Ferner sind zu erwähnen die entsprechenden β-Hydroxy-verbindungen, welche als Vorprodukte verwendet werden können, z.B.: 1-Amino-4-β-hydroxyäthylsulfonylbenzol, 1-Amino-3-β-hydroxyäthylsulfonylbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Die Kupplungskomponenten sind vor allem geeignete Verbindungen der Aminobenzol-und Naphthalinreihe, z.B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt:

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxynaphthalin-7-sulfonsäure, 2-Methyl- bzw. 2-Aethylamino-5-hydroxynaphthalin-7-sulfonsäure, 2-Amino-5-hydroxynaphthalin-1,7-disulfonsäure, 2-Amino-8-hydroxy naphthalin-6-sulfonsäure, 2-Methyl- bzw. 2-Aethylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynapthalin-3,6- bzw. -4,6-disulfonsäure, 1-(4'-Aminobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-(N,N-di-β-hydroxyäthylamino)-benzol, 1-Amino-3-(N,N-di-β-sulfatoäthylamino)-benzol, 1-Amino-3-(N,N-di-β-hydroxyäthylamino)-4-methoxy-benzol, 1-Amino-3-(N,N-di-β-sulfatoäthylamino)-4-methoxybenzol, 1-Amino-3-sulfobenzylaminobenzol, 1-Amino-3-sulfo-benzylamino-4-chlorbenzol, 1-Amino-3-(N,N-di-sulfobenzylamino)-benzol, 1-(3'-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2'-Sulfo-4'-aminophenyl)-3-carboxy-pyrazolon-(5).

Falls eine der beiden Komponenten beide Reaktivgruppen zugleich enthält, oder diese in die betreffende Komponente eingeführt werden können, wie bei den Kupplungskomponenten der Formeln

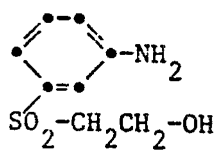

und

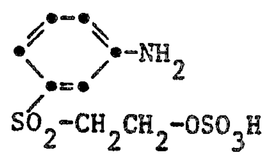

kann die andere Komponente, in diesem Falle die Diazokomponente, auch nichtreaktiv sein, Beispiele sind: Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 2-Aminodiphenyläther, 1-Aminobenzol-2-, -3- oder -4-sulfonsäureamid, 1-Aminobenzol-2-, -3- oder -4-carbonsäure, Dehydrothio-p-toluidin-sulfonsäure, 1-Amino-3-trifluormethylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3-oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure,1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3-oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybe-zol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7-, oder -8-sulfonsäure, 2-Aminonaphthalin-1-, -3-, -4-, -5-, -6-, -7- oder -8-sulfonsäure, 2-Aminonaphthalin-3,6-oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxynaphthalin-4,8-disulfonsäure, 4-Aminoazobenzol-3,4'-disulfonsäure, 3-Methoxy-4-amino-6-methylazob enzol-2',4'-disulfonsäure, 3-Methoxy-4-amino-6-methylazobenzol-2',5'-disulfonsäure.

Die Diazotierung der eine diazotierbare Aminogruppe enthalteneden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des Dichlortriazins der Formel (7) mit den Diazokomponenten oder den Kupplungskomponenten bzw. mit acylierbaren Monoazo- oder Disazo-Zwischenprodukten bzw. mit den aminogruppenhaltigen Farbstoffen oder deren Vorprodukten erfolgen vorzugsweise in wässriger Lösung oder Suspension, bei niedriger Temperatur und bei schwach saurem, neutralem bis schwach alkalischem pH-Wert. Vorteilhaft wird bei der Kondensation freiwerdende Chlorwasserstoff laufend durch Zugabe wässriger Alkalihydroxide, -carbonate oder -bicarbonate neutralisiert. Die Kondensationen des 2,4,6-Trichlor-s-triazins mit den aliphatischen Alkoholen oder Thiolen werden vorzugsweise in organischen Lösungsmitteln, z.B. den betreffenden Alkoholen. ausgeführt.

Geeignete aliphatische Alkohole und Thiole sind z.B.:

Methanol, Aethanol, Propanol, Isopropanol, n-Butanol, Isobutanol, sek.-Butanol, tert.-Butanol, β-Methoxyäthanol, β-Aethoxyäthanol, γ-Methoxypropanol, γ-Aethoxypropanol, Methanthiol, Aethanthiol, Propanthiol Isopropanthiol und n-Butanthiol.

Die erfindungsgemäss verwendeten Reaktivfarbstoffe eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe sind auch zum Färben oder Bedrucken von Hydroxylgruppenhaltigen Fasern geeignet, die in Mischgeweben enthalten sind, z.B. von Gemischen aus Baumwolle mit Polyesterfasern oder Polyamidfasern.

Die erfindungsgemäss verwendeten Farbstoffe lassen sich auf verschiedene Weise auf das Fasermaterial applizieren und auf der Faser fixieren, insbesondere in Form von wässrigen Farbstofflösungen und -druckpasten.

Zur Durchführung des erfindungsgemässen Verfahrens im alkalischen pH-Bereich werden als alkalische säurebindende Mittel beispielsweise Natriumhydroxyd, Kaliumhydroxyd oder ein Alkalisalz einer schwachen Säure, wie Natriumcarbonat oder -bicarbonat, Trinatriumphosphat, Dinatriumphosphat, Natriumsilikat oder trichloressigsaures Natrium oder Mischungen aus diesen säurebindenden Mitteln verwendet.

Die den Farbstoff und das säurebindende Mittel enthaltenden Färbeflotten und Druckpasten können innerhalb eines breiten Temperaturbereiches auf das zu färbende Material aufgebracht werden, vorzugsweise bei Raumtemperatur, 15 bis 30 °C, oder bei Temperaturen bis zu 60 °C. Man geht zweckmässigerweise so vor, dass man das Fasergut mit den Färbeflotten, die gegebenenfalls neutrale Salze enthalten, imprägniert und abquetscht, beispielsweise auf üblichem Wege foulardiert, und es, gegebenenfalls nach vorhergehender Zwischentrocknung, zwecks Fixierung der Farbstoffe einer Alkalibehandlung oder in Gegenwart von Alkali einer Hitzebehandlung unterwirft. In ähnlicher Weise erzeugt man Drucke, indem man das Fasermaterial mit den genannten Druckpasten bedruckt, zwischentrocknet und es zur Fixierung der Farbstoffe einer Hitzebehandlung unterwirft.

Erfolgt das Färben nach dem Ausziehverfahren, so enthält das Färbebad eines oder mehrere der oben genannten säurebindenden Mittel und gegebenenfalls die üblichen Zusätze, wie anorganische Salze, Harnstoff oder andere weiter unten genannte Hilfsmittel. Die Ware wird mit den wässrigen, gegebenenfalls salzhaltigen Farbstofflösungen imprägniert, und die Farbstoffe werden nach einer Alkalibehandlung oder in Gegenwart von Alkali, gegebenenfalls unter Wärmeeinwirkung fixiert.

In Abhängigkeit von der Konzentration und der Art des säurebindenden Mittels ist es auch möglich die Fixierung der Farbstoffe bei Raumtemperatur oder bei etwas erhöhter Temperatur, beispielsweise bei 20 bis 60 °C, durchzuführen. Nach diesem sogenannten Kaltverweilverfahren wird z.B. der Farbstoff zusammen mit dem Alkali auf dem Foulard aufgebracht und dann durch mehrstündiges Lagern der imprägnierten oder bedruckten feuchten Ware bei Raumtemperatur fixiert.

Die Fixierung der Färbungen und Drucke im alkalischen Bereich durch Hitzebehandlung kann nach verschiedenen, in der Technik üblichen Methoden erfolgen, beispielsweise durch Dämpfen mit Sattdampf bei ca. 100 bis 103 °C (Pad-steam-Verfahren) oder mit überhitztem Wasserdampf bei Temperaturen bis 150 °C, mit Heissluft bei Temperaturen von 120 bis 230 °C (Thermofixier-Verfahren), durch Infrarotbestrahlung, durch Hindurchführen durch heisse, stark salzhaltige Lösungen, durch heisse Dämpfe indifferenter organischer Lösungsmittel oder durch Hinüberleiten der geklotzten oder bedruckten Stoffbahn über eine Reihe beheizter Walzen.

Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Färbeflotten und Druckpasten können ausser dem Alkali die allgemein üblichen Zusätze enthalten, die Lösungen beispielsweise anorganische Salze, wie Alkalichloride oder Alkalisulfate, Harnstoff, Alginatverdickungen, wasserlösliche Cellulosealkyläther sowie Dispergierungs- und Egalisierhilfsmittel, die Druckpasten beispielsweise Harnstoff, Natrium-m-nitrobenzolsulfonat und die üblichen Verdickungsmittel, wie Methylcellulose, Stärkeäther, Emulsionsverdickungen oder vorzugsweise ein Alginat, z.B. Natriumalginat.

Das alkalische säurebindende Mittel kann auch vor oder nach der Applikation der Färbeflotten oder Druckpasten, die dann dieses Mittel nicht enthalten, auf das Fasermaterial aufgebracht werden, beispielsweise durch Aufsprühen oder Klotzen einer wässrigen Lösung des Mittels. Die Lösungen dieser Mittel können allgemein übliche Zusätze enthalten, wie sie beispielsweise oben bereits genannt wurden. Werden diese Mittel gleichzeitig mit dem Farbstoff auf das zu färbende Material appliziert, so ist es zweckmässig, sie in der Färbeflotte oder in der den Farbstoff enthaltenden Druckpaste zu lösen.

Das erfindungsgemässe Verfahren wird vorzugsweise nach der Auszieh-, Kaltverweil- oder Pad-steam-Methode ausgeführt.

Das erfindungsgemässe Verfahren kann nach der Ausziehmethode bei niedrigen Färbetemperaturen ausgeübt werden und erfordert beim Pad-steam-Verfahren nur kurze Dämpfzeiten. Es werden hohe Fixierwerte erhalten, wobei die Differenz zwischen Ausziehgrad und Fixiergrad klein, d.h. der Seifverlust gering ist.

Die mit den erfindungsgemäss zur Anwendung gelangenden Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der DE-A-3 113 473 sind ähnliche Reaktivfarbstoffe bekannt, die jedoch nicht alle vorteilhaften Eigenschaften der erfindungsgemässen Reaktivfarbstoffe aufweisen.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschreiben, sie ergibt sich jedoch ohne weiteres aus der allgemeinen Beschreibung.

Beispiel 1: 2 Teile des Reaktivfarbstoffes der Formel

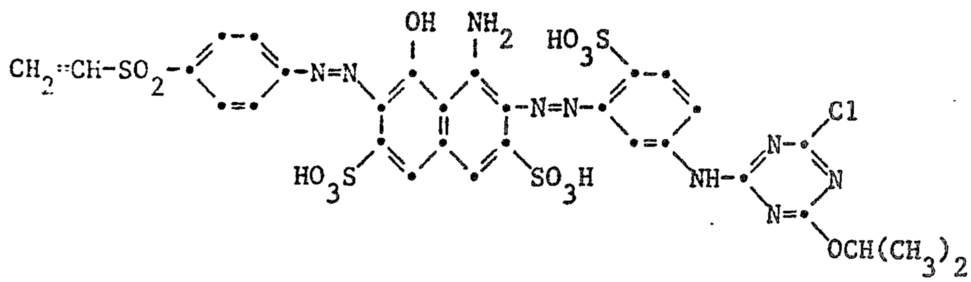

(Herstellung nachfolgend beschrieben) werden in 400 Teilen Wasser gelöst; dazu gibt man 1500 Teile einer Lösung, die pro Liter 67 g Natriumchlorid enthält. In dieses Färbebad geht man bei 25° C mit 100 Teilen eines Baumwollgewebes ein. Innerhalb 10 Minuten wird die Temperatur des Färbebades auf 40° C erhöht. Nach weiteren 10 Minuten werden 100 Teile einer Lösung, die pro Liter Wasser 20 g Natriumhydroxyd und 100 g kalziniertes Soda enthält, zugegeben. Die Temperatur des Färbebades wird weitere 80 Minuten bei 40° C gehalten. Danach wird die gefärbte Ware gespült, während einer Viertelstunde mit einem nichtionogenen Waschmittel kochend geseift, nochmals gespült und getrocknet. Man erhält eine marineblaue Färbung mit guten Echtheitseigenschaften.

Beispiel 2: 4 Teile des in Beispiel 1 verwendeten Reaktivfarbstoffes werden in 50 Teilen Wasser gelöst. Dazu gibt man 50 Teile einer Lösung, die pro Liter Wasser 12 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

Beispiel 3: 8 Teile des in Beispiel 1 verwendeten Reaktivfarbstoffes werden in 80 Teilen Wasser gelöst. Dazu gibt man 20 Teile einer Lösung, die pro Liter 60 g Natriumhydroxyd und 0,25 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine schwarze Färbung mit guten Echtheitseigenschaften.

Beispiel 4: 4 Teile des in Beispiel 1 verwendeten Reaktivfarbstoffes werden in 50 Teilen Wasser gelöst. Dazu gibt man 50 Teile einer Lösung, die pro Liter 24 g Natriumhydroxyd und 0,2 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 6

Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine schwarze Färbung mit guten Echtheitseigenschaften.

Beispiel 5: 4 Teile des in Beispiel 1 verwendeten Reaktivfarbstoffes werden in 50 Teilen Wasser gelöst. Dazu gibt man 50 Teile einer Lösung, die pro Liter 40 g Natriumcarbonat und 400 g Harnstoff enthält. Mit der erhaltenen Lösung wird ein Baumwollgewebe foulardiert, so dass es um 75 % seines Gewichtes zunimmt, getrocknet und dann 60 bis 90 Sekunden bei 140° C thermofixiert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

Beispiel 6: 4 Teile des in Beispiel 1 verwendeten Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet.

Dann imprägniert man das Gewebe mit einer 20° C warmen Lösung, die pro Liter 6 g Natriumhydroxyd und 300 g Natriumchlorid enthält, quetscht auf 75 % Gewichtszunahme ab, dämpft die Färbung während 30 bis 60 Sekunden bei 100 bis 102° C, spült, seift während einer Viertelstunde in einer 0,3%-igen kochenden Lösung eines nichtionogenen Waschmittels, spült und trocknet. Man erhält eine blaue Färbung mit guten Echtheitseigenschaften.

Beispiel 7: 7 Teile des in Beispiel 1 verwendeten Reaktivfarbstoffes werden in 50 Teilen Wasser gelöst. Dazu gibt man 50 Teile einer Lösung, die pro Liter 24 g Natriumhydroxyd, 0,04 Liter Wasserglas (38° Bé) und 200 g Harnstoff enthält. Mit der erhaltenen Lösung wird ein Baumwollgewebe foulardiert, so dass es um 70 % seines Gewichtes zunimmt. Das Baumwollgewebe wird so getrocknet (zum Beispiel: 90 Sekunden Trockenhitze bei 100° C) und 30 bis 60 Sekunden bei 102° C im Sattdampf gedämpft. Danach wird die gefärbte Ware gespült, während einer Viertelstunde mit einem nichtionogenen Waschmittel kochend geseift, nochmals gespült und getrocknet. Man erhält eine schwarze Färbung mit guten Echtheitseigenschaften.

Beispiel 8: 5 Teile des in Beispiel 1 verwendeten Reaktivfarbstoffes werden unter schnellem Rühren in 100 Teile einer Stammverdickung, enthaltend 50 Teile 5-%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste bedruckt man ein Baumwollgewebe, trocknet und dämpft den erhaltenen bedruckten Stoff 8 Minuten bei 102° C in gesättigtem Dampf. Das bedruckte Gewebe wird dann gespült, gegebenenfallskochend geseift und nochmals gespült, und anschliessend getrocknet. Man erhält einen schwarzen Druck mit guten Echtheitseigenschaften.

Herstellungsvorschrift des in Beispiel 1 verwendeten Reaktivfarbstoffes

Zu 69 Teilen der in 600 Teilen Wasser gelösten Kupplungskomponente der Formel

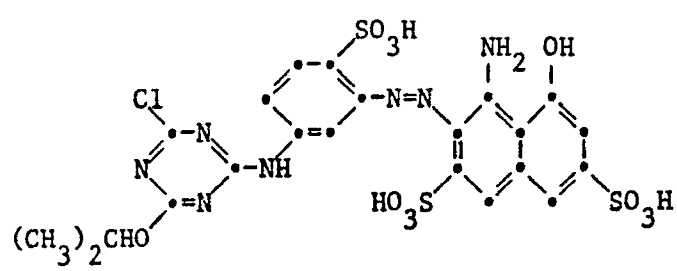

(hergestellt durch saure Kupplung von diazotiertem 2-(3'-Amino-4'-sulfophenyl-amino)-4-chlor-6-isopropoxy-1,3,5-triazin auf 1-Amino-8-hydroxynaphthalin-3,6-disulfonsäure) wird bei 0 bis 5° C eine Mischung von 28,1 Teilen diazotiertem 1-Amino-4-($\beta$-sulfatoäthylsulfonyl)-benzol mit 300 Teilen Wasser gegeben. Nach vollständiger Kupplungsreaktion bei pH 5,5 bis 6,5 wird der pH der auf Raumtemperatur erwärmten Reaktionslösung durch laufende Zugabe von verdünnter Natriumhydroxydlösung bei 10 gehalten. Nach vollständiger Eliminierungsreaktion wird die Reaktionslösung neutralisiert und der gebildete Reaktivfarbstoff der Formel

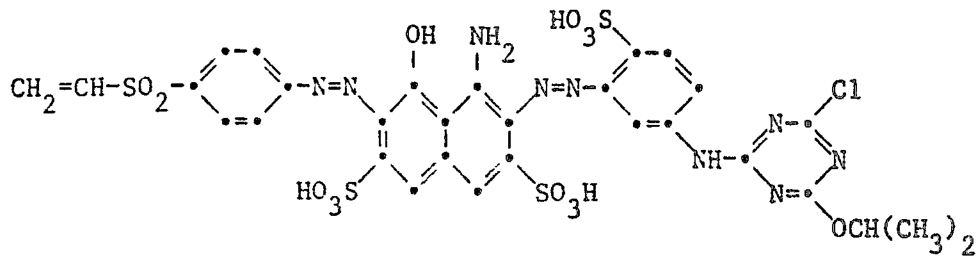

durch Einstreuen von Natriumchlorid ausgesalzen, filtriert und getrocknet.

Weitere Reaktivfarbstoffe, die nach den in den Beispielen beschriebenen Färbe- beziehungsweise Druckvorschriften Färbungen beziehungsweise Drucke in dem in Tabelle 1 Spalte 4 angegebenen Farbton mit guten Echtheitseigenschaften ergeben, werden erhalten, wenn man gemäss den Angaben in der Herstellungsvorschrift die in Spalte 2 angegebene diazotierte Diazokomponente sauer auf 1-Amino-8-hydroxynaphthalin-3,6-disulfonsäure kuppelt, und auf die so erhaltene Monoazoverbindung die in Spalte 3 angegebene diazotierte Diazokomponente kuppelt.

Tabelle 1

| Nr. | Diazokomponente | Diazokomponente | Farbton auf Baumwolle |
|---|---|---|---|
| 1 | 2-(3'-Amino-4'-sulfophenylamino)-4-chlor-6-isopropoxy-1,3,5-triazin | 1-Amino-4-(β-acetoxyäthyl-sulfonyl)-benzol | blau |
| 2 | do. | 1-Amino-5-(4-(β-chloräthyl-sulfonyl)-butyrylamino)-benzol-2-sulfonsäure | blau |
| 3 | do. | 1-Amino-4-(4-(β-chloräthyl-sulfonyl)-butyrylamino)-benzol-2-sulfonsäure | blau |
| 4 | 2-(3'-Amino-4'-sulfophenylamino)-4-chlor-6-(β-äthoxyäthoxy-1,3,5-triazin | 1-Amino-4-(β-sulfatoäthyl-sulfonyl)-benzol-2-sulfonsäure | blau |
| 5 | do. | 1-Amino-4-(β-acetoxyäthyl-sulfonyl)-benzol | blau |
| 6 | do. | 1-Amino-5-(4-(β-chloräthyl-sulfonyl)-butyrylamino)-benzol-2-sulfonsäure | blau |

Tabelle 1 (Fortsetzung)

| Nr. | Diazokomponente | Diazokomponente | Farbton auf Baumwolle |
|---|---|---|---|
| 7 | 2-(3'-Amino-4'-sulfophenyl-amino)-4-chlor-6-(β-äthoxy-äthoxy-1,3,5-triazin | 1-Amino-4-(4-(β-chlor-äthyl-sulfonyl)-butyrylamino)-benzol-2-sulfonsäure | blau |
| 8 | 2-(4'-Amino-3'-sulfophenyl-amino)-4-chlor-6-isopropoxy-1,3,5-triazin | 1-Amino-4-(β-sulfato-äthyl-sulfonyl)-benzol | grünstichig/blau |
| 9 | do. | 1-Amino-4-(β-acetoxy-äthyl-sulfonyl)-benzol | do. |
| 10 | do. | 1-Amino-5-(4-(β-chlor-äthyl-sulfonyl)-butyrylamino)-benzol-2-sulfonsäure | do. |
| 11 | do. | 1-Amino-4-(4-(β-chlor-äthyl-sulfonyl)-butyrylamino)-benzol-2-sulfonsäure | do. |
| 12 | 2-(4'-Amino-3'-sulfophenyl-amino)-4-chlor-6-(β-äthoxy-äthoxy)-1,3,5-triazin | 1-Amino-4-(β-sulfato-äthyl-sulfonyl)-benzol | grünstichig/blau |
| 13 | do. | 1-Amino-4-(β-acetoxy-äthyl-sulfonyl)-benzol | do. |
| 14 | do. | 1-Amino-5-(4-(β-chlor-äthyl-sulfonyl)-butyrylamino)-benzol-2-sulfonsäure | do. |
| 15 | do. | 1-Amino-4-(4-(β-chlor-äthyl-sulfonyl)-butyrylamino)-benzol-2-sulfonsäure | do. |
| 16 | 2-(4'-Amino-2',5'-di-sulfophenyl-amino)-4-4-chlor-6-isopropoxy-1,3,5-triazin | 1-Amino-4-(β-sulfato-äthyl-sulfonyl)-benzol-2-sulfonsäure | do. |

Tabelle 1(Fortsetzung)

| Nr. | Diazokomponente | Diazokomponente | Farbton auf Baumwolle |
|---|---|---|---|
| 17 | 2-(4'-Amino-2'-5'disulfophenyl-amino)-4-chlor-6-isopropoxy-1,3,5-triazin | 1-Amino-4-(β-acetoxyäthyl-sulfonyl)-benzol | grünstichig blau |
| 18 | do. | 1-Amino-5-(4-(β-chloräthyl-sulfonyl)-butyrylamino)-benzol-2-sulfonsäure | do. |
| 19 | do. | 1-Amino-4-(4-(β-chloräthyl-sulfonyl)-butyrylamino)-benzol-2-sulfonsäure | do. |
| 20 | 2-(3'-Amino-4',6'-disulfophenylamino)-4-chlor-6-isopropoxy-1,3,5-triazin | 1-Amino-4-(β-sulfatoäthyl-sulfonyl)-benzol | blau |
| 21 | do. | 1-Amino-4-(β-acetoxyäthyl-sulfonyl)-benzol | blau |
| 22 | do. | 1-Amino-5-(4-(β-chloräthyl-sulfonyl)-butyrylamino)-benzol-2-sulfonsäure | blau |
| 23 | do. | 1-Amino-4-(4-(β-chloräthyl-sulfonyl)-butyrylamino)-benzol-2-sulfonsäure | blau |

Tabelle I (Fortsetzung)

| Nr. | Diazokomponente | Diazokomponente | Farbton auf Baumwolle |
|---|---|---|---|
| 24 | 2-(3'-Amino-4'-sulfophenylamino)-4-chlor-6-methylthio-1,3,5-triazin | 1-Amino-4-(β-sulfatoäthyl-sulfonyl)-benzol | blau |
| 25 | do. | 1-Amino-4-(β-acetoxyäthyl-sulfonyl)-benzol | do. |
| 26 | do. | 1-Amino-5-(4-(β-chloräthyl-sulfonyl)-butyrylamino)-benzol-2-sulfonsäure | do. |
| 27 | do. | 1-Amino-4-(4-(β-chloräthyl-sulfonyl)-butyrylamino)-benzol-2-sulfonsäure | do. |
| 28 | 2-(4'-Amino-2',5'-disulfophenylamino)-4-chlor-6-methylthio-1,3,5-triazin | 1-Amino-4-(β-sulfatoäthyl-sulfonyl)-benzol-2-sulfonsäure | grünstichig/blau |
| 29 | do. | 1-Amino-4-(β-acetoxyäthyl-sulfonyl)-benzol | do. |
| 30 | do. | 1-Amino-5-(4-(β-chloräthyl-sulfonyl)-butyrylamino)-benzol-2-sulfonsäure | do. |
| 31 | do. | 1-Amino-4-(4-(β-chloräthyl-sulfonyl)-butyrylamino)-benzol-2-sulfonsäure | do. |
| 32 | 2-(3'-Amino-4',6'-disulfophenylamino)-4-chlor-6-methylthio-1,3,5-triazin | 1-Amino-4-(β-sulfatoäthyl-sulfonyl)-benzol | blau |

Tabelle 1 (Fortsetzung)

| Nr. | Diazokomponente | Diazokomponente | Farbton auf Baumwolle |
|---|---|---|---|
| 33 | 2-(3'-Amino-4',6'-disulfophenylamino)-4-chlor-6-methylthio-1,3,5-triazin | 1-Amino-4-(β-acetoxyäthyl-sulfonyl)-benzol | blau |
| 34 | do. | 1-Amino-5-(4-(β-chloräthyl-sulfonyl)-butyrylamino)-benzol-2-sulfonsäure | do. |
| 35 | do. | 1-Amino-4-(4-(β-chloräthyl-sulfonyl)-butyrylamino)-benzol-2-sulfonsäure | do. |

Weitere Reaktivfarbstoffe, die nach den in den Beispielen beschriebenen Färbe- beziehungsweise Druckvorschriften Färbungen beziehungsweise Drucke in dem in Tabelle 2 Spalte 4 angegebenen Farbton mit guten Echtheitseigenschaften ergeben, werden erhalten, wenn man die in Spalte 2 angegebene Kupplungskomponente bei Raumtemperatur und pH 6,6 mit 1,1 Aequivalent 2,4-Dichlor-6-isopropoxy-1,3,5-triazin oder mit 1,1 Aequivalent 2,4-Dichlor-6-(β-äthoxyäthoxy)-1,3,5-triazin oder 2,4-Dichlor-6-methoxy-1,3,5-triazin oder mit 1,1 Aequivalent 2,4-Dichlor-6-methylthio-1,3,5-triazin acyliert, und auf das so erhaltene Acylierungsprodukt die in Spalte 3 angegebene diazotierte Diazokomponente kuppelt.

Tabelle 2

| Nr. | Kupplungskomponente | Diazkomponente | Farbton auf Baumwolle |
|---|---|---|---|
| 1 | 1-Amino-8-hydroxy-naphthalin-3,6-disulfonsäure | 1-Amino-4-(β-sulfatoäthyl-sulfonyl)-benzol | rot |
| 2 | do. | 1-Amino-4-(β-acetoxyäthyl-sulfonyl)-benzol | do. |
| 3 | do. | 1-Amino-5-(4-(β-chloräthyl-sulfonyl)-butyrylamino)-benzol-2-sulfonsäure | do. |
| 4 | do. | 1-Amino-4-(4-(β-chloräthyl-sulfonyl)-butyrylamino)-benzol-2-sulfonsäure | blaustichig/rot |
| 5 | 2-Amino-5-hydroxy-naphthalin-7-sulfonsäure | 1-Amino-4-(β-sulfatoäthyl-sulfonyl)-benzol-2-sulfonsäure | orange |
| 6 | do. | 1-Amino-4-(β-acetoxyäthyl-sulfonyl)-benzol | orange |
| 7 | do. | 1-Amino-5-(4-(β-chloräthyl-sulfonyl)-butyrylamino)-benzol-2-sulfonsäure | orange |
| 8 | do. | 1-Amino-4-(4-(β-chloräthyl-sulfonyl)-butyrylamino)-benzol-2-sulfonsäure | scharlach |
| 9 | 1,3-Diaminobenzol-4-sulfonsäure | 1-Amino-4-(β-sulfatoäthyl-sulfonyl)-benzol | gelb |

Weitere Reaktivfarbstoffe, die nach den in den Beispielen beschriebenen Färbe- beziehungsweise Druckvorschriften Färbungen beziehungsweise Drucke in dem in Tabelle 3 Spalte 4 angegebenen Farbton mit guten Echtheitseigenschaften ergeben, werden erhalten, wenn man die in Spalte 2 angegebene Kupplungskomponente bei 0 °C und pH 6,5 mit 1,1 Aequivalent geschmolzenem 4-(β-Chloräthylsulfonyl)-butyrylchlorid acyliert, und auf das so erhaltene Acylierungsprodukt die in Spalte 3 angegebene diazotierte Diazokomponente kuppelt.

Tabelle 3

| Nr. | Kupplungskomponente | Diazokomponente | Farbton auf Baumwolle |
|---|---|---|---|
| 1 | Amino-8-hydroxy-naphthalin-3,6-disulfonsäure | 2-(3'-Amino-4'-sulfophenylamino)-4-chlor-6-isopropoxy-1,3,5-triazin | rot |
| 2 | do. | 2-(3'-Amino-4'-sulfophenylamino)-4-chlor-6-(β-äthoxyäthoxy)-1,3,5-triazin | do. |
| 3 | do. | 2-(4'-Amino-3'-sulfophenylamino)-4-chlor-6-isopropoxy-1,3,5-triazin | blaustichig/rot |
| 4 | do. | 2-(4'-Amino-3'-sulfophenylamino)-4-chlor-6-(β-äthoxyäthoxy)-1,3,5-triazin | do. |
| 5 | do. | 2-(4'-Amino-2',5'-disulfophenylamino)-4-chlor-6-isopropoxy-1,3,5-triazin | do. |
| 6 | do. | 2-(3'-Amino-4',6'-disulfophenylamino)-4-chlor-6-isopropoxy-1,3,5-triazin | rot |

Tabelle 3 (Fortsetzung)

| Nr. | Kupplungskomponente | Diazokomponente | Farbton auf Baumwolle |
|---|---|---|---|
| 7 | 2-Amino-5-hydroxy-naphthalin-7-sulfonsäure | 2-(3'-Amino-4'-sulfophenylamino)-4-chlor-6-isopropoxy-1,3,5-triazin | orange |
| 8 | do. | 2-(3'-Amino-4'-sulfophenylamino)-4-chlor-6-(β-äthoxyäthoxy)-1,3,5-triazin | do. |
| 9 | do. | 2-(4'-Amino-3'-sulfophenylamino)-4-chlor-6-isopropoxy-1,3,5-triazin | scharlach |
| 10 | do | 2-(4'-Amino-3'-sulfophenylamino)-4-chlor-6-(β-äthoxyäthoxy)-1,3,5-triazin | do. |
| 11 | do. | 2-(4'-Amino-2',5'-disulfophenyl-amino)-4-chlor-6-isopropoxy-1,3,5-triazin | do. |
| 12 | do. | 2-(3'-Amino-4',6'-disulfophenyl-amino)-4-chlor-6-isopropoxy-1,3,5-triazin | orange |
| 13 | 1-Amino-8-hydroxy-naphthalin-3,6-disulfonsäure | 2-(3'-Amino-4'-sulfophenylamino)-4-chlor-6-methylthio-1,3,5-triazin | rot |
| 14 | do. | 2-(4'-Amino-3'-sulfophenylamino)-4-chlor-6-methylthio-1,3,5-triazin | blaustichig rot |

Tabelle 3 (Fortsetzung)

| Nr. | Kupplungskomponente | Diazokomponente | Farbton auf Baumwolle |
|---|---|---|---|
| 15 | 1-Amino-8-hydroxy-naphthalin-3,6-disulfonsäure | 2-(4'-Amino-2',5'-disulfophenylamino)-4-chlor-6-methylthio-1,3,5-triazin | blaustichig rot |
| 16 | do. | 2-(3'-Amino-4',6'-disulfophenylamino)-4-chlor-6-methylthio-1,3,5-triazin | rot |
| 17 | 2-Amino-5-hydroxy-naphthalin-7-sulfonsäure | 2-(3'-Amino-4'-sulfophenylamino)-4-chlor-6-methylthio-1,3,5-triazin | orange |
| 18 | do. | 2-(4'-Amino-3'-sulfophenylamino)-4-chlor-6-methylthio-1,3,5-triazin | scharlach |
| 19 | do. | 2-(4'-Amino-2',5'-disulfophenylamino)-4-chlor-6-methylthio-1,3,5-triazin | do. |
| 20 | do. | 2-(3'-Amino-4',6'-disulfophenylamino)-4-chlor-6-methylthio-1,3,5-triazin | orange |

## Ansprüche

1. Verfahren zum Färben oder Bedrucken von textilen Fasermaterialien mit Reaktivfarbstoffen, dadurch gekennzeichnet, dass man Reaktivfarbstoffe der Formel

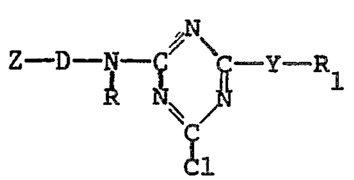 (1)

verwendet, worin Z ein Rest der Formel

$$CH_2=CH-SO_2-\!\left(C_{3-5}\text{-alkyl-CO-}\underset{\displaystyle R'}{\underset{|}{N}}\right)_{0-1}- \qquad (2)$$

oder

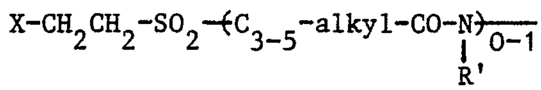 (3)

und R' Wasserstoff oder gegebenenfalls substituiertes $C_1$-$C_4$-Alkyl ist, R Wasserstoff, Methyl oder Aethyl, Y Sauerstoff oder Schwefel, $R_1$ $C_1$-$C_4$-Alkyl oder $C_1$-$C_4$-Alkoxy-$C_1$-$C_4$-alkyl, X ein unter alkalischen Bedingungen abspaltbarer anorganischer oder organischer Rest und D ein Anthrachinon-, Phthalocyanin-, Formazan-, Azomethin-, Dioxazin-, Phenazin-, Stilben-, Triphenylmethan-, Xanthen-, Thioxanthon-, Pyrenchinon- oder Perylentetracarbimid-Farbstoffrest ist, oder dass man Mono- oder Disazofarbstoffe der Formel

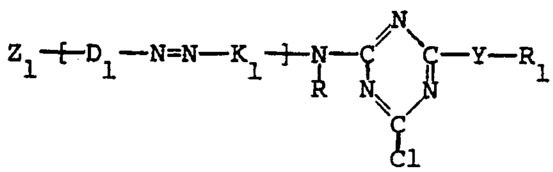 (4)

oder

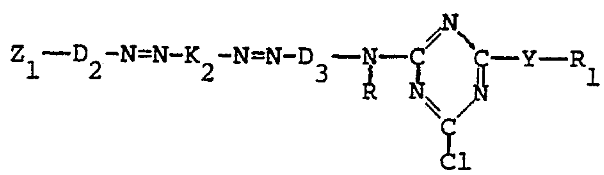 (5),

worin $D_1$ ein hydroxygruppenfreier Rest einer Diazokomponente der Benzolreihe, $K_1$ der Rest einer Kupplungskomponente der Benzol- oder Naphthalinreiheoder der heterocyclischen Reihe, $D_2$ und $D_3$ je ein Rest einer Diazokomponente der Benzol- oder Naphthalinreihe, $K_2$ der Rest einer Kupplungskomponente der Naphthalinreihe ist, wobei die Diazokomponente $D_3$ in ortho-Stellung zu einer Aminogruppe in der Kupplungskomponente $K_2$ gekuppelt ist, und $Z_1$ an $D_2$ als Diazokomponente der Benzolreihe in m- oder p-Stellung zu Azogruppe gebunden ist, $Z_1$ Vinylsulfonyl, $\beta$-Chloräthylsulfonyl, $\beta$-Sulfatoäthylsulfonyl, $\beta$-Acetoxyäthylsulfonyl oder $\beta$-Chloräthylsulfonylbutyrylamino ist, und R, Y und $R_1$ die angegebenen Bedeutungen haben, verwendet.

2. Verfahren gemäss Anspruch 1, dadurch gekennzeichnet, dass man Reaktivfarbstoffe der Formel (4) verwendet.

3. Verfahren gemäss Anspruch 1, dadurch gekennzeichnet, dass man Reaktivfarbstoffe der Formel (5) verwendet.

4. Verfahren gemäss Anspruch 1 zum Färben von Cellulosefasern.

5. Verfahren gemäss Anspruch 4, dadurch gekennzeichnet, dass man nach der Auszieh-, Kaltverweil- oder Pad-steam-Methode färbt.

6. Das nach dem Verfahren gemäss Anspruch 1 gefärbte oder bedruckte textile Fasermaterial.

7. Reaktivfarbstoffe der Formel

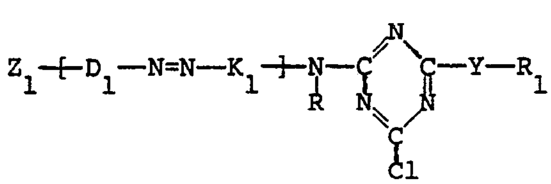 (4),

worin $D_1$ ein von HO- und HOOC-Gruppen freier Rest einer Diazokomponente der Benzolreihe, $K_1$ der Rest einer Kupplungskomponente der Benzol- oder Naphthalinreihe oder der heterocyclischen Reihe, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist.

**8.** Reaktivfarbstoffe der Formel

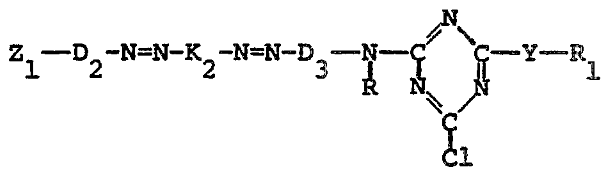

(5),

worin $D_2$ und $D_3$ je ein Rest einer Diazokomponente der Benzol- oder Naphthalinreihe, $K_2$ der Rest einer Kupplungskomponente der Naphthalinreihe ist, wobei die Diazokomponente $D_3$ in ortho-Stellung zu einer Aminogruppe in der Kupplungskomponente $K_2$ gekuppelt ist, und $Z_1$ an $D_2$ als Diazokomponente der Benzolreihe in m- oder p-Stellung gebunden ist, $Z_1$ Vinylsulfonyl, β-Chloräthylsulfonyl, β-Sulfatoäthylsulfonyl, β-Acetoxyäthylsulfonyl oder β-Chloräthylsulfonylbutyrylamino, R Wasserstoff, Methyl oder Aethyl, Y Sauerstoff oder Schwefel, und $R_1$ $C_1$-$C_4$-Alkyl oder $C_1$-$C_4$-Alkoxy-$C_1$-$C_4$-alkyl ist.

## Claims

**1.** A process for dyeing or printing textile fibre materials with reactive dyes, which comprise using reactive dyes of the formula

(1)

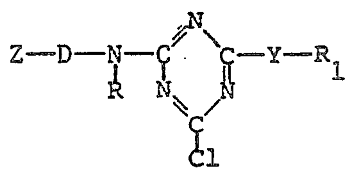

in which Z is a radical of the formula

(2)

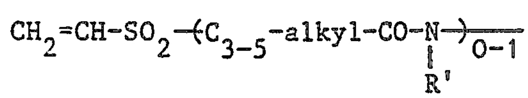

or

(3)

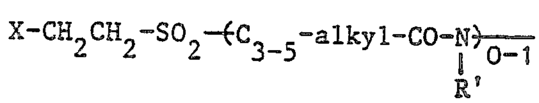

and R' is hydrogen or substituted or unsubstituted $C_1$-$C_4$alkyl, R is hydrogen, methyl or ethyl, Y is oxygen or sulfur, $R_1$ is $C_1$-$C_4$alkyl or $C_1$-$C_4$alkoxy-$C_1$-$C_4$alkyl, X is an inorganic or organic radical detachable under alkaline conditions, and D is an anthraquinone, phthalocyanine, formazan, azomethine, dioxazine, phenazine, stilbene, triphenylmethane, xanthene, thioxanthone, pyrenquinone or perylenetetracarbimide dye radical, or which comprises using monoazo or disazo dyes of the formula

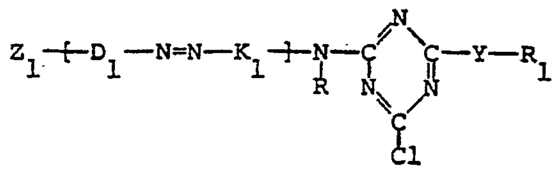

(4)

or

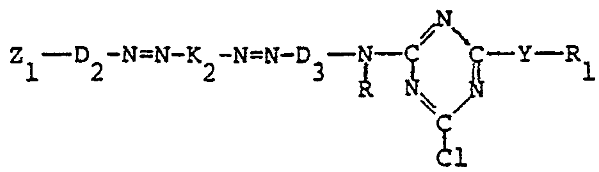

(5)

in which $D_1$ is a hydroxyl-free radical of a diazo component of the benzene series, $K_1$ is the radical of a coupling component of the benzene or naphthalene series or of the heterocyclic series , $D_2$ and $D_3$ are each a radical of a diazo component of the benzene or naphthalene series, $K_2$ is the radical of a coupling component of the naphthalene series, the diazo component $D_3$ being coupled in the ortho-position relative to an amino group in the coupling component $K_2$, and $Z_1$ is bonded to $D_2$ as the diazo component of the benzene series in the m- or p-position relative to the azo group, $Z_1$ is vinylsulfonyl, $\beta$-chloroethylsulfonyl, $\beta$-sulfatoethylsulfonyl, $\beta$-acetoxyethylsulfonyl or $\beta$-chloroethylsulfonylbutyrylamino, and R, Y and $R_1$ are as defined above.

**2.** A process according to claim 1, wherein use is made of reactive dyes of the formula (4).

**3.** A process according to claim 1, wherein use is made of reactive dyes of the formula (5).

**4.** A process according to claim 1, for dyeing cellulose fibres.

**5.** A process according to claim 4, wherein dyeing is by the exhaust, cold pad-batch or pad-steam method.

**6.** A textile fibre material dyed or printed using a process according to claim 1.

**7.** A reactive dye of the formula

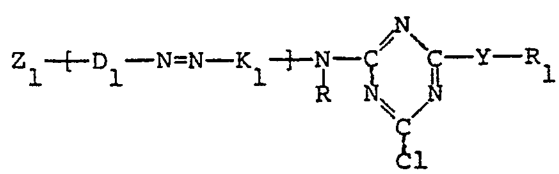

(4)

in which $D_1$ is an HO- and HOOC- free radical of a diazo component of the benzene series, $K_1$ is the radical of a coupling component of the benzene or naphthalene series or of the heterocyclic series, $Z_1$ is vinylsulfonyl, $\beta$-chloroethylsulfonyl, $\beta$-sulfatoethylsulfonyl, $\beta$-acetoxyethylsulfonyl or $\beta$-chloroethylsulfonylbutyrylamino, R is hydrogen, methyl or ethyl, Y is oxygen or sulfur and $R_1$ is $C_1$-$C_4$alkyl or $C_1$-$C_4$alkoxy-$C_1$-$C_4$alkyl.

**8.** A reactive dye of the formula

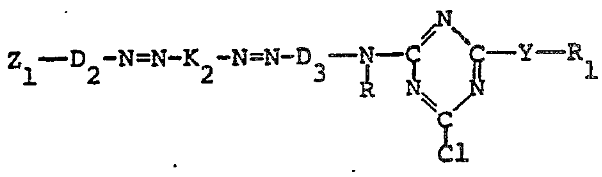

(5)

in which $D_2$ and $D_3$ are each the radical of a diazo component of the benzene or naphthalene series, $K_2$ is the radical of a coupling component of the naphthalene series, the diazo component $D_3$ being coupled in the ortho-position relative to an amino group in the coupling component $K_2$, and $Z_1$ is bonded to $D_2$ as the diazo component of the benzene series in the m- or p-position, $Z_1$ is vinylsulfonyl, β-chloroethylsulfonyl, β-sulfatoethylsulfonyl, β-acetoxyethylsulfonyl or β-chloroethylsulfonylbutyrylamino, R is hydrogen, methyl or ethyl, Y is oxygen or sulfur, and $R_1$ is $C_1$-$C_4$alkyl or $C_1$-$C_4$alkoxy-$C_1$-$C_4$alkyl.

## Revendications

1. Procédé de teinture ou d'impression de matières fibreuses textiles par des colorants réactifs, caractérisé en ce qu'on utilise des colorants réactifs répondant à la formule

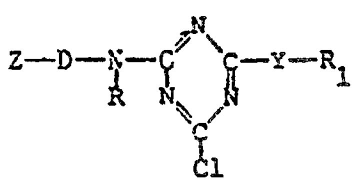

(1)

dans laquelle Z désigne un reste répondant à la formule

$$CH_2{=}CH{-}SO_2{-}(C_{3-5}\text{-alkyl-CO-}\underset{R'}{N}{-})_{0-1} \qquad (2)$$

ou

$$X{-}CH_2CH_2{-}SO_2{-}(C_{3-5}\text{-alkyl-CO-}\underset{R'}{N}{-})_{0-1} \qquad (3)$$

et R' désigne un atome d'hydrogène ou un groupe alkyle en $C_1$-$C_4$ le cas échéant substitué, R désigne un atome d'hydrogène, un groupe méthyle ou éthyle, Y désigne un atome d'oxygène ou de soufre, $R_1$ désigne un groupe alkyle en $C_1$-$C_4$ ou (alcoxy en $C_1$-$C_4$) (alkyle en $C_1$-$C_4$), X désigne un reste minéral ou organique éliminable en milieu alcalin et D est le reste d'un colorant de la série de l'anthraquinone, des phtalocyanines, du formazan, de l'azométhine, de la dioxazine, de la phénazine, du stilbéne, du triphénylméthane, du xanthène, de la thioxanthone, de la pyrènequinone ou du pérylènetétracarbimide, ou en ce qu'on utilise des colorants mono ou disazoïques répondant à la formule

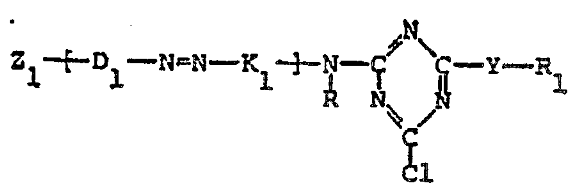

(4)

ou

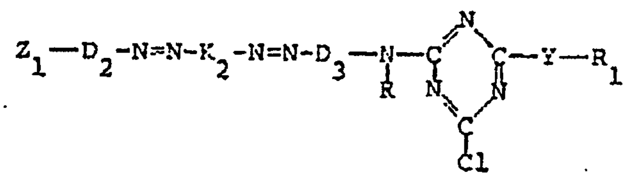

(5),

dans lesquelles $D_1$ est un reste exempt de groupes hydroxy d'un constituant diazotable de la série du benzène, $K_1$ est le reste d'un constituant de copulation de la série du benzène ou du napthalène ou de la série hétérocyclique, $D_2$ et $D_3$ sont chacun un reste d'un constituant diazotable de la série du benzène ou du naphtalène, $K_2$ est le reste d'un constituant de copulation de la série du naphtalène, le constituant diazotable $D_3$ étant fixé par copulation en position ortho par rapport à un groupe amino porté par le constituant de copulation $K_2$, et $Z_1$ est lié à $D_2$ désignant un constituant diazotable de la série du benzène, en position m ou p par rapport au groupe azo, $Z_1$ est un groupe vinylsulfonyle, β-chloréthylsulfonyle, β-sulfatoéthylsulfonyle, β-acétoxyéthylsulfonyle ou β-chloréthylsulfonylbutyrylamino, et R, Y et $R_1$ ont les significations indiquées.

2. Procédé selon la revendication 1, caractérisé en ce qu'on utilise des colorants réactifs répondant à la formule (4).

3. Procédé selon la revendication 1, caractérisé en ce qu'on utilise des colorants réactifs répondant à la formule (5).

4. Procédé selon la revendication 1, pour la teinture de fibres de cellulose.

5. Procédé selon la revendication 4, caractérisé en ce qu'on teint par le procédé par épuisement, par le procédé de contact à froid ou par le procédé de Pad-steam.

6. Matière fibreuse textile teinte ou imprimée par le procédé conforme à la revendication 1.

7. Colorants réactifs répondant à la formule

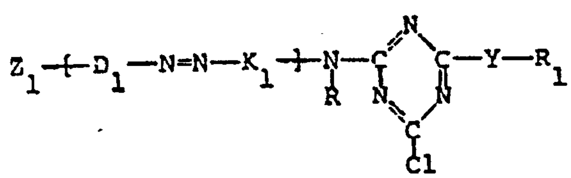

(4),

dans laquelle $D_1$ est un reste exempt de groupes-OH et -COOH d'un constituant diazotable de la série du benzène, $K_1$ est le reste d'un constituant de copulation de la série du benzène ou du naphtalène ou de la série hétérocyclique, $Z_1$ est un radical vinylsulfonyle, β-chloréthylsulfonyle, β-sulfatoéthylsulfonyle, β-acétoxyéthylsulfonyle ou β-chloréthylsulfonylbutyrylamino, R est un atome d'hydrogène, un groupe méthyle ou éthyle, Y est un atome d'oxygène ou de soufre et $R_1$ est un groupe alkyle en $C_1$-$C_4$ ou (alcoxy en $C_1$-$C_4$) (alkyle en $C_1$-$C_4$).

8. Colorants réactifs répondant à la formule

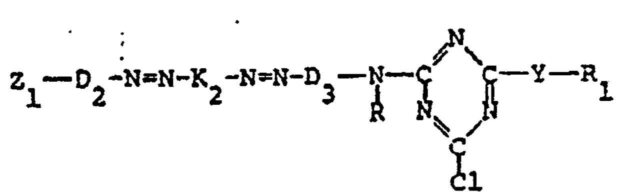

(5),

dans laquelle, $D_2$ et $D_3$ sont chacun un reste d'un constituant diazotable de la série du benzène ou du naphtalène, $K_2$ est le reste d'un constituant de copulation de la série du naphtalène, le constituant diazotable $D_3$ étant fixé par copulation en position ortho par rapport à un groupe amino porté par le

constituant de copulation $K_2$, et $Z_1$ étant lié à $D_2$ désignant un constituant diazotable de la série du benzène, en position m ou p, $Z_1$ est un groupe vinylsulfonyle, $\beta$-chloréthylsulfonyle, $\beta$-sulfatoéthylsulfonyle, $\beta$-acétoxyéthylsulfonyle ou $\beta$-chloréthylsulfonylbutyrylamino, R est un atome d'hydrogène, un groupe méthyle ou éthyle, Y est un atome d'oxygène ou de soufre et $R_1$ est un groupe alkyle en $C_1$-$C_4$ ou (alcoxy en $C_1$-$C_4$) (alkyle en $C_1$-$C_4$).